# EUROPEAN PATENT APPLICATION

(11) **EP 4 224 348 A1**
(43) Date of publication of application: **09.08.2023**
(21) Application number: 22305132.7
(22) Date of filing: 08.02.2022
(51) Int. Cl.: G06F 21/60, H04L 9/08, H04L 9/40

(54) **SECURED CONTAINER DEPLOYMENT**

(71) Applicant: Schneider Electric Industries SAS, 92500 Rueil-Malmaison (FR)
(72) Inventor: MORAND, Denis, 06390 Châteauneuf-Villevieille (FR); PATRI, Michael, 637641 Aschaffenburg (DE)
(74) Representative: Schneider Electric

(57) **Abstract**

A system comprising an edge server (ES) for a secured deployment of a container (CNT) in the edge server (ES), the system further comprising a secure element (SE) and a message broker (MB) that routes messages from containers, wherein a container (CNT) is deployed in the edge server (ES), the system further comprising :
a secure element manager (SEM) configured to negotiate with the deployed container (CNT) to agree on an ephemeral key (Ke), by exchanging messages containing values derived from shared secrets,
wherein the secure element manager (SEM) retrieves a secret identifier (SId) from the secured element (SE),
wherein the secure element manager (SEM) encrypts the secret identifier (SId) with the ephemeral key (Ke),
wherein the container (CNT) retrieves the encrypted secret identifier (SId) from the secure element manager (SEM)
wherein the container (CNT) decrypts the encrypted secret identifier (SId) with the ephemeral key (Ke),
wherein the container (CNT) accesses the secured element (SE) using the decrypted secret identifier (SId),
wherein the container (CNT) retrieves credentials generated by the secured element (SE) in order to connect with the message broker.

## Description

### FIELD OF INVENTION

The present disclosure relates generally to software micro-services, and more particularly to deployment of software micro-services usually provided via software containers.

### BACKGROUND

Industrial automation/control systems are employed for controlling operation of a wide variety of systems, including processes, machines, etc., and are typically adaptable to different control applications through configuration and interconnection of multiple control system components or devices, such as control modules, Input/Output (I/O) modules, I/O devices, etc. Existing industrial control systems typically include a processor running or executing a control program to interact with an I/O system (e.g., typically one or more I/O modules or devices) to receive system information in the form of analog and/or digital inputs from field sensors and to provide outputs (analog and/or digital) to one or more actuators. Industrial control systems are increasingly being interconnected with management information and other systems in a manufacturing facility, and may be operatively connected to any number of communications networks to facilitate various business management functions such as inventory control, accounting, manufacturing control, etc., in addition to the process/machine control functionality.

Some edge devices are located between the control level of an industrial system (comprising sensors, actuators, and controllers) and the enterprise level preferrable software systems hosted in the cloud. Data are collected from the control level by edge devices and pushed to the enterprise systems for analysis. Actions are taken by the enterprise systems and/or the edge devices to, e.g. improve the process, notify a good or a bad behavior of the process, highlighting a deteriorating product quality, etc.

An edge software is running on dedicated edge devices, which segregates the control level from the enterprise network. An edge device may be embedded in an edge gateway such as an IT/OT box, which refers to an interface between an OT network comprising industrial devices and a telecommunication network such as the Internet.

Once an edge device is provisioned (known by the enterprise system), the fleet management capability allows to deploy any new or upgraded edge software features from the enterprise level to the edge device, which consists of an application composed by containers, providing micro-services and exchanging data all together.

Currently, the remote management of edge software is based on two main principles. According a first principle, the security between the different containers running at the edge level is based on a fixed agreements, where most often the integrity information and other credentials are included in the container itself and therefore implies a need of knowing the security standards for the container developers. For an enhanced security a manual intervention needs to be executed to authenticate and authorize the container in the environment of the edge device. According a second principle, the data exchange between containers at the edge level is based on predefined and agreed data API contracts. Each container needs to agree on those data exchange contracts to be able to exchange data with any other container.

To satisfy some security constraints at edge level, a container can communicate with another container if it is authenticated and authorized by the container receiving the communication request or more globally needing an agreement at the full edge level. Currently it requires a technical contract predefined for the data exchange.

There is therefore a need for improving remote container deployment and configuration for authentication and authorization of the deployed container without human intervention and without sharing any secrets or security concepts.

### SUMMARY

This summary is provided to introduce concepts related to the present inventive subject matter. This summary is not intended to identify essential features of the claimed subject matter nor is it intended for use in determining or limiting the scope of the claimed subject matter.

In one implementation, there is provided a method for a secured deployment of a container in an edge server linked to a secure element and to a message broker that routes messages from containers, comprising the following steps:
deploying a container in the edge server,
the container negotiating with a secure element manager to agree on an ephemeral key, by exchanging messages containing values derived from shared secrets,
the secure element manager retrieving a secret identifier from the secured element,
the secure element manager encrypting the secret identifier with the ephemeral key,
the container retrieving the encrypted secret identifier from the secure element manager,
the container decrypting the encrypted secret identifier with the ephemeral key,
the container accessing the secured element using the decrypted secret identifier,
the container retrieving credentials generated by the secured element in order to connect with the message broker.

Advantageously, containers can be deployed and configured for the message broker without human intervention and without defining any data schemas, and containers do not need to be aware of any existing API contract in place.

Using this approach of container deployment and data exchange, the edge applications do not have to consider any security aspects as it is flexibly managed by the edge framework via the secure element manager.

In an embodiment, wherein the container provides a policy identifier to the secure element manager that interrogates the secure element with the policy identifier, wherein the secure element generates the secret identifier based on a policy identified by the policy identifier.

In an embodiment, said policy specifies operation rules that define conditions to perform operations on the secure element.

In an embodiment, said policy further specifies a set of access rules that defines conditions to access the secure element and the secret identifier is not generated by the secure element if at least one access rule is not satisfied by the secure element.

In an embodiment, the policy is associated with metadata and the secret identifier is not generated by the secure element if the metadata do not satisfy at least one metadata rule of a set of metadata rules that defines conditions to access the secure element and that is implemented by the secure element.

In an embodiment, the secure element manager further generates a role identifier associated with the secret identifier that is retrieved by the container and used by the container with the decrypted secret identifier for accessing the secured element.

In an embodiment, the role identifier is not encrypted.

In an embodiment, the secure element sends the generated role identifier and secret identifier to the secure element manager via a secured session.

In an embodiment, the negotiation between the container and the secure element manager includes the following steps:
the container sending a first message containing a first value derived from a first random secret to the secure element manager,
receiving a second message containing a second value derived from a second random secret from the secure element manager, and computing the ephemeral key as a function of a third value derived from the second value and the first random secret.

In an embodiment, the secure element manager encrypts the secret identifier with the ephemeral key based on a symmetric encryption algorithm.

Advantageously, the data exchange between containers is build based on a simple common structure. Any container gets automatically authenticated and authorized based on the container integrity to connect to the message broker to publish and/or subscribe to any data within the message broker. Based on a data identification, e.g. namespace, a container as subscriber can identify relevant information or discharge non-relevant data.

With such kind of flexible message broker, any container can define its own most efficient data exchange independent of the existing edge framework and the associated vendor in place.

In another implementation, there is provided a system comprising an edge server for a secured deployment of a container in the edge server, the system further comprising a secure element and a message broker that routes messages from containers, wherein a container is deployed in the edge server, the system further comprising :
a secure element manager configured to negotiate with the deployed container to agree on an ephemeral key, by exchanging messages containing values derived from shared secrets,
wherein the secure element manager retrieves a secret identifier from the secured element,
wherein the secure element manager encrypts the secret identifier with the ephemeral key,
wherein the container retrieves the encrypted secret identifier from the secure element manager,
wherein the container decrypts the encrypted secret identifier with the ephemeral key,
wherein the container accesses the secured element using the decrypted secret identifier,
wherein the container retrieves credentials generated by the secured element (SE) in order to connect with the message broker.

In another implementation there is provided a computer-readable medium having embodied thereon a computer program for executing a method for a secured deployment of a container in an edge server. Said computer program comprises instructions which carry out steps according to the method according to the invention.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
FIG. 1 shows a schematic block diagram of a communication system for a secured deployment of a container according to one embodiment;
FIG. 2 is a flow diagram of a method for a secured deployment of a container according to one embodiment.

The same reference number represents the same element or the same type of element on all drawings.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

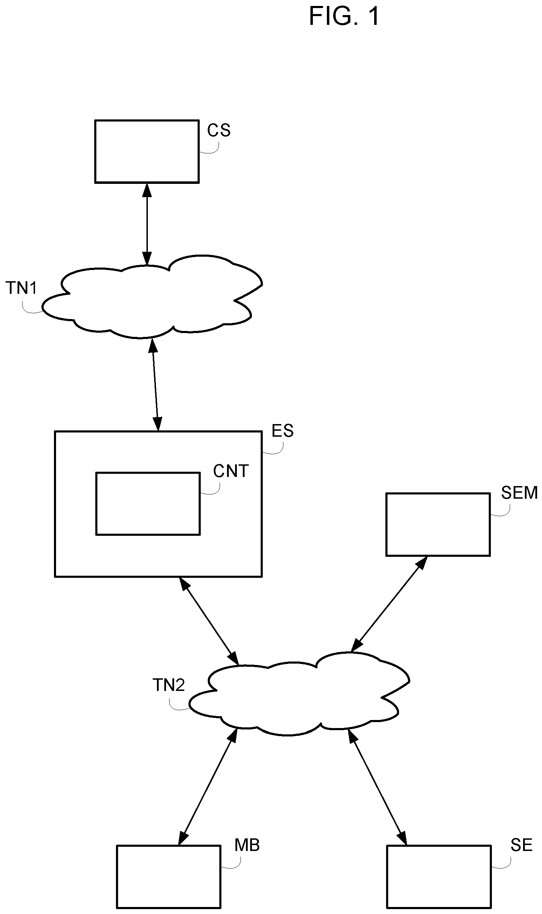

Referring to FIG. 1, a communication system comprises a set of containers CNT, a message broker MB, a secure element SE and a secure element manager SEM. Each of the message broker MB, the secure element SE, the secure element manager SEM and one of the set of containers CNT may be implemented in a respective edge server ES. In some embodiments, a part or all of the message broker MB, the secure element SE and one of the set of containers CNT may be implemented in a same edge server ES. For sake of clarity, only one edge serve is represented in FIG. 1.

The edge server ES implementing a container CNT is able to communicate with a container server CS via a first telecommunication network TN1. If not implemented in a same edge server, the message broker MB, the secure element SE, the secure element manager SEM and a container CNT are able to communicate with each other via a second telecommunication network TN2.

The first and second telecommunication networks may be a wired or wireless network, or a combination of wired and wireless networks. The first and second telecommunication networks can be associated with a packet network, for example, an IP ("Internet Protocol") high-speed network such as the Internet or an intranet, or even a company-specific private network.

The first or second telecommunication network is for example a digital cellular radio communication network of the GPRS (General Packet Radio Service), UMTS (Universal Mobile Telecommunications System), CDMA (Code Division Multiple Access) type, LTE (Long Term Evolution) or even 5G (Fifth Generation) type.

In another example, the first or second telecommunication network is a public wireless network of limited scope, such as WLAN (Wireless Local Area Network) or conforming to a standard 802.1x, or medium range according to the protocol WiMAX (World Wide Interoperability Microwave Access).

Additionally, the first or second telecommunication network may be operating in accordance with fourth or fifth generation wireless communication protocols and/or the like as well as similar wireless communication protocols that may be developed in the future.

A container CNT is a software package that contains everything a specific software functionality needs to run, said functionality being related to a microservice. Microservice based design is a method of design that depart from the traditional monolithic design approach, by dividing the service into multiple components that could be designed, implemented, distributed and deployed independently from each other's. The service becomes modularized, flexible and adaptable.

This includes the executable program as well as system tools, libraries, and settings. Containers are not installed like traditional software programs, which allows them to be executed isolated from the other software and/or the operating system itself. For example, a server running three containerized applications runs a single operating system, and each containerized application shares the operating system kernel with the others. Shared parts of the operating system are read only, while each container has its own mount (i.e., a way to access the container) for writing.

In some embodiments, Container based virtualization technologies have gained great importance for the management and operation of applications of all types. In contrast to hypervisor based virtualization technologies that are based on specialized hypervisor operating systems that manage and abstract physical hardware to provide virtual computer systems on which conventional operating systems can be executed, container based virtualization uses features provided by an operating system to create isolated execution environments for processes which are called container. Processes executed in those containers are provided with an execution environment that simulates an operating system.

The containers CNT share a common operating system, hosted by the edge server ES that implements an engine able to run the containers.

The container server CS stores container images on a remote container registry (for a later deployment). More specifically, a container image is a lightweight, standalone, executable package of software that includes everything needed to run an application: code, system tools, system libraries and settings. Container images can be deployed in the edge server, by a pull or push action. Then a container image becomes a container at runtime, when executed by the edge server.

In other words, in container technology, container images describe the immutable packaging of the application that comprises all the files that are presented to a container instance. It is the "blueprint" of the application that can be shared between container instances, and also exchanged with other container hosts. A container instances is a running container that uses a container image as the starting point of its (root) file system.

The containers CNT are connected to the message broker MB if the containers provide valid credentials. Once connected to the message broker MB, a container can send data to the message broker MB. The message broker MB takes the responsibility to guarantee the distribution of the message to other containers.

The message broker MB acts as an intermediary computer program (that may be a container or not) that routes messages to one or more destinations, provides content and topic-based routing using a publish/subscribe pattern. The message broker is able to decouple end-points (like containers acting as data producer and as data consumer), to provide reliable storage and to guarantee message delivery. In one example, the message broker can rely on the open source RabbitMQ.

The secure element SE handles a computer program (that may be a container or not) designed to securely access and share sensitive data within distributed applications. Sensitive data are for example passwords, certificates, encryption keys, API Keys.

The secure element SE uses a set of policies and login constraints required for successful login to the secure element SE from a container using an authentication method. The authentication method can be based on a "AppRole" that is an authentication mechanism to allow containers to acquire a token to interact with the secure element SE. The authentication method can use a role identifier RId and a secret identifier SId for login for a specific container. The role identifier RId (like a user name) and the secret identifier SId (like a password) form a set of credentials for a container to login to the secure element SE. The secret identifier SId is a credential that is required by default for any login and is intended to always be secret, while the role identifier RId is similar to a username and is not intended to be secret.

It is assumed that the secure element SE is installed and running on a host like an edge server ES. The secure element SE is configured with a set of policies, this configuration step being generally executed by a security engineer. A policy identifier PId is given to each container, wherein the policy identifier PId is not a sensitive data and can be publicly know and wherein the policy identifier PId allows to identify a given policy. Each container is initially associated with a policy identifier PId in the secure element SE.

A policy specifies a set of operation rules (permissions) that specifies the conditions necessary to perform certain operations on the secure element SE (like read / write, read only etc.) For example, the set of operation rules can be defined by an access control list (ACL) policy.

In one embodiment, a policy may further specify a set of access rules that defines conditions for a container to access the secure element, i.e. for authentication and authorization. A container CNT may be refused access to the secure element SE if at least one access rule is not satisfied by the secure element.

In one embodiment, a policy may be associated with metadata and the secure element SE may implement a set of metadata rules that defines conditions to access the secure element. A container CNT may be refused access to the secure element SE if at least one metadata rule is not satisfied by the metadata.

The secure element manager SEM is in charge to securely get credentials from the secure element SE and distributes securely credential to the right application (container).

In one embodiment, the secure element manager SEM stores a secret (secret identifier SId as a credential to the secure element SE in a hardware security module which includes a secure storage. The secure element manager SEM may act as a mediator between a hardware security module and a container CNT or the secure element SE.

In one embodiment, the hardware security module is a trusted platform module (TPM), that may be a physically discrete TPM, a virtual TPM, an integrated TPM on a chip or a firmware TPM for example. The interface and physical properties of the TPM are specified by the Trusted Computing Group and are implementation independent. The secure element manager SEM is able to probe specific memory locations located in the hardware security module.

In one embodiment, the secure element manager SEM can use keys stored in the hardware security module to initially unseal the secure element SE, allowing the secure element SE to access encrypted data.

In another embodiment, the secure element manager SEM is implemented in the same edge server ES implementing the secure element SE.

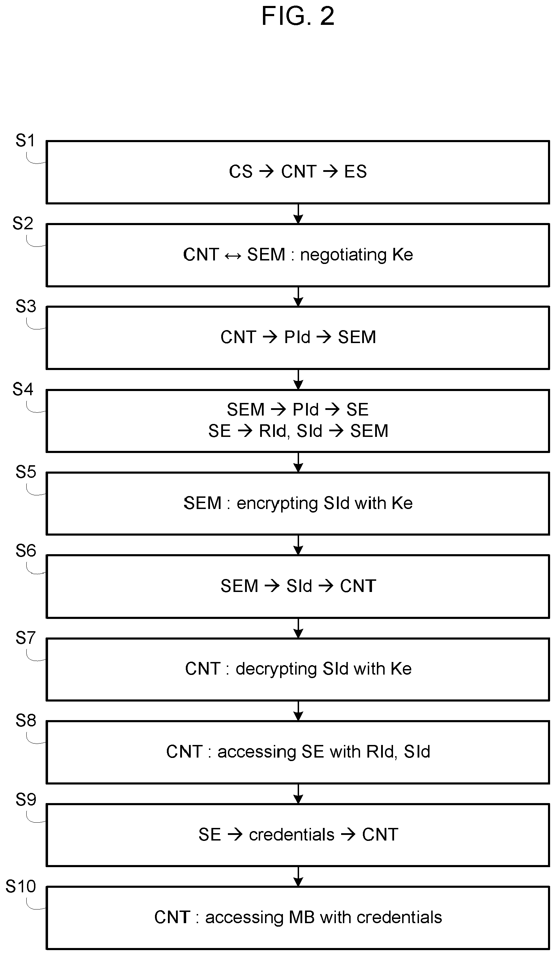

With reference to FIG. 2, a method for a secured deployment of containers according to one embodiment of the invention comprises steps S1 to S10.

In step S1, a container CNT is deployed in the edge server ES from the container server CS. More specifically in one embodiment, a container image is pushed from the container registry of the container server CS to the container engine of the edge server ES that can run the container based on the container image.

Once deployed and at runtime, the container CNT retrieves the policy identifier PId. In one embodiment, the policy identifier PId is stored as an environment variable in a configuration file of the container.

In step S2, the container CNT negotiates with the secure element manager SEM to agree on an algorithm for computing a pair of public and private keys, by exchanging messages containing values derived from shared secrets

To that end, the container CNT launches series of messages exchange with the secure element manager SEM in order to determine on each side authentication keys. The messages exchange can be based on a Diffie-Hellman protocol.

In one embodiment based on a Diffie-Hellman protocol, the container CNT negotiates with the secure element manager SEM to agree on an ephemeral key Ke, by exchanging messages containing values derived from random secrets, the ephemeral key Ke being computed locally in the container CNT and in the secure element manager SEM based on a function taking as input at least the random secrets.

In the embodiment based on a Diffie-Hellman protocol, the container CNT and the secure element manager SEM exchanges series of messages, and some of them can be sent simultaneously. The container CNT and the secure element manager SEM negotiate to agree on a group G and a generator g of the group G. The group G can be a multiplicative group of integers modulo p, where p can be prime and g is a primitive root mod p.

The secure element manager SEM determines a random secret "a" and the secure element manager SEM determines a random secret "b", where a and b are integers. The container CNT computes (ga)(mod p) and the secure element manager SEM computes (gb)(mod p). The container CNT sends a first message containing the value A of (ga)(mod p) to the secure element manager SEM through a secured channel.

The secure element manager SEM sends a second message containing the value B of (gb)(mod p) to the container CNT through the secured channel. Then the container CNT knows "a" and "B" and the secure element manager SEM knows "b" and "A" and both can compute a shared secret S based on the value of (gab [mod p]). The container CNT and secure element manager SEM have arrived at the same value, because (ga)b and (gb)a are equal mod p and groups are power associative. The container CNT and the secure element manager SEM compute a same ephemeral key Ke as a function of the shared secret S, the function being known beforehand from container CNT and the secure element manager SEM.

The process described above corresponds to a specific embodiment, but initial authentication key can be computed with similar process, for instance where the group G is a cyclic group, a and b are natural number and the smart card and the personalization server compute (ga)b and (gb)a that are equal because the group G is power associative.

At the end of step S2, both the container CNT and the secure element SE are able to compute the ephemeral key Ke. In one embodiment, both the container CNT and the secure element SE compute the ephemeral key Ke and stores securely the ephemeral key Ke in a temporary memory.

In step S3, the container CNT provides the policy identifier PId (called "Name Role" in one example) to the secure element manager SEM that is then able to invoke the authentication method for the container at the secure element SE.

In step S4, the secure element manager SEM interrogates the secure element SE with the policy identifier PId. If the policy identified by the policy identifier PId does not provide any constraint, the secure element SE generates a role identifier RId and a secret identifier SId and sends back the generated role identifier RId and secret identifier SId to the secure element manager SEM via a secured session, for example of IPsec (Internet Protocol Security) type.

The role identifier RId, without encryption required, may be stored in a dedicated file or may be send back to the container CNT by any computer program mechanism.

In one embodiment wherein the policy further specifies a set of access rules that defines conditions to access the secure element, the secure element SE checks if the access rules are satisfied by the secure element. The secret identifier SId is not generated by the secure element SE if at least one access rule is not satisfied by the secure element. For example, the secure element is aware of the software version of other containers connected to the message broker and if the software version of the container CNT is not compatible with the software version of other containers, the secure element SE does not generate credentials for the container CNT.

In one embodiment wherein the policy is associated with metadata and the secure element implements a set of metadata rules that defines conditions to access the secure element SE, the secure element SE checks if the metadata rules are satisfied by the metadata. The secret identifier SId is not generated by the secure element SE if at least one metadata rule is not satisfied by the metadata. For example, the container is a producer of a payload of type "A" and the secure element is aware that containers connected to the message broker are consumer of payloads of type "B" and/or "C". As there is no need of producer of a payload of type "A", the secure element SE does not generate credentials for the container CNT.

When the secure element becomes aware of a container connected to the message broker that is consumer of payload of type "A", the secure element may generate the secret identifier SId. In this case, the secure element may refuse the generation of the secret identifier SId for a container if the metadata do not satisfy at least one metadata rule of a set of metadata rules, the container configuration being put on hold, and may trigger the generation of the secret identifier SId for the container if the metadata now satisfy said at least one metadata.

The policy allows the system to orchestrate the deployment and configuration of containers depending on their needs. Some containers may be deployed but not authorized to access the message broker, which improves the efficiency of data exchange by avoiding useless publication/subscription to the message broker.

In step S5, the secure element manager SEM encrypts the secret identifier SId with the ephemeral key Ke. For example, the encryption algorithm used is a symmetric encryption algorithm, like the Advanced Encryption Standard with Galois/Counter Mode (AES-CGM).

In step S6, the container CNT retrieves the encrypted secret identifier SId from the secure element manager SEM.

In one embodiment, the secure element manager SEM sends the encrypted secret identifier SId to the container CNT. For example, the encrypted secret identifier SId is included in the payload of a message.

In another embodiment, the secure element manager SEM generates a file with encrypted secret identifier SId in a location accessible by the container.

In step S7, the container CNT decrypts the encrypted secret identifier SId with the ephemeral key Ke and stores the secret identifier SId securely in a temporary memory.

In step S8, both the role identifier RId and the secret identifier SId are known by the container CNT. The container CNT accesses the secure element SE with the role identifier RId and the secret identifier SId.

In step S9, the container CNT asks the secure element SE to generate credentials for the message broker MB and retrieves the generated credentials. The container CNT communicates with the secure element SE via a secured session. For example, the message broker MB sends the credentials to the container CNT in a https response.

In step S10, the container CNT connects to the message broker MB using the retrieved credentials and is then able to communicate with the message broker MB

The container CNT is then able to publish message, or consumes messages already published by other containers via the message broker MB

Other containers already connected to the message broker MB can consume the messages provided by the container CNT newly deployed on the edge server ES.

More specifically in one embodiment, the container already connected to the message broker MB is now able consuming messages filtered by meta information provided by another container.

Advantageously, an unexpected container that was not deployed and configured as described above is not able to communicate with the message broker as the unexpected container did not register to the secure element in order to get credentials to be logged in the message broker.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

Furthermore, although exemplary embodiments have been described above in some exemplary combination of components and/or functions, it should be appreciated that, alternative embodiments may be provided by different combinations of members and/or functions without departing from the scope of the present disclosure. In addition, it is specifically contemplated that a particular feature described, either individually or as part of an embodiment, can be combined with other individually described features, or parts of other embodiments

## Claims

1. A method for a secured deployment of a container (CNT) in an edge server (ES) linked to a secure element (SE) and to a message broker (MB) that routes messages from containers, comprising the following steps:
deploying (S1) a container (CNT) in the edge server (ES),
the container (CNT) negotiating (S2) with a secure element manager (SEM) to agree on an ephemeral key (Ke), by exchanging messages containing values derived from shared secrets,
the secure element manager (SEM) retrieving (S4) a secret identifier (SId) from the secured element (SE),
the secure element manager (SEM) encrypting (S5) the secret identifier (SId) with the ephemeral key (Ke),
the container (CNT) retrieving (S6) the encrypted secret identifier (SId) from the secure element manager (SEM),
the container (CNT) decrypting (S7) the encrypted secret identifier (SId) with the ephemeral key (Ke),
the container (CNT) accessing (S8) the secured element (SE) using the decrypted secret identifier (SId),
the container (CNT) retrieving (S9) credentials generated by the secured element (SE) in order to connect with the message broker (MB).

2. A method according to claim 1, wherein the container (CNT) provides (S3) a policy identifier (PId) to the secure element manager (SEM) that interrogates the secure element (SE) with the policy identifier (PId), wherein the secure element (SE) generates the secret identifier (SId) based on a policy identified by the policy identifier (PId).

3. A method according to claim 2, wherein said policy specifies operation rules that define conditions to perform operations on the secure element (SE).

4. A method according to claims 2 and 3, wherein said policy further specifies a set of access rules that defines conditions to access the secure element (SE) and the secret identifier (SId) is not generated by the secure element (SE) if at least one access rule is not satisfied by the secure element (SE).

5. A method according to claims 2 and 3, wherein the policy is associated with metadata and the secret identifier (SId) is not generated by the secure element (SE) if the metadata do not satisfy at least one metadata rule of a set of metadata rules that defines conditions to access the secure element (SE) and that is implemented by the secure element (SE).

6. A method according to any of previous claims, wherein the secure element manager (SEM) further generates a role identifier (RId) associated with the secret identifier (SId) that is retrieved by the container (CNT) and used by the container (CNT) with the decrypted secret identifier (SId) for accessing the secured element (SE).

7. A method according to claim 6, wherein the role identifier (RId) is not encrypted.

8. A method according to claims 6 and 7, wherein the secure element (SE) sends the generated role identifier (RId) and secret identifier (SId) to the secure element manager (SEM) via a secured session.

9. A method according to any of previous claims, wherein the negotiation between the container (CNT) and the secure element manager (SEM) includes the following steps:
the container (CNT) sending a first message containing a first value derived from a first random secret to the secure element manager (SEM),
receiving a second message containing a second value derived from a second random secret from the secure element manager (SEM), and computing the ephemeral key (Ke) as a function of a third value derived from the second value and the first random secret.

10. A method according to any of previous claims, wherein the secure element manager (SEM) encrypts the secret identifier (SId) with the ephemeral key (Ke) based on a symmetric encryption algorithm.

11. A system comprising an edge server (ES) for a secured deployment of a container (CNT) in the edge server (ES), the system further comprising a secure element (SE) and a message broker (MB) that routes messages from containers, wherein a container (CNT) is deployed in the edge server (ES), the system further comprising :
a secure element manager (SEM) configured to negotiate with the deployed container (CNT) to agree on an ephemeral key (Ke), by exchanging messages containing values derived from shared secrets,
wherein the secure element manager (SEM) retrieves a secret identifier (SId) from the secured element (SE),
wherein the secure element manager (SEM) encrypts the secret identifier (SId) with the ephemeral key (Ke),
wherein the container (CNT) retrieves the encrypted secret identifier (SId) from the secure element manager (SEM),
wherein the container (CNT) decrypts the encrypted secret identifier (SId) with the ephemeral key (Ke),
wherein the container (CNT) accesses the secured element (SE) using the decrypted secret identifier (SId),
wherein the container (CNT) retrieves credentials generated by the secured element (SE) in order to connect with the message broker (MB).

12. A computer-readable medium having embodied thereon a computer program for executing a method for a secured deployment of a container (CNT) in an edge server (ES) according to any of claims 1 to 10.
